# EUROPÄISCHE PATENTANMELDUNG

(11) **EP 2 211 245 A1**
(43) Veröffentlichungstag der Anmeldung: **28.07.2010**
(21) Anmeldenummer: 09151076.8
(22) Anmeldetag: 22.01.2009
(51) Int. Cl.: G05B 19/404

(54) **Verfahren zur Schwingungsfilterung**

(71) Anmelder: Siemens Aktiengesellschaft, 80333 München (DE)
(72) Erfinder: Fretzschner, Stephan, 80992, München (DE); Knorr, Markus, 86157, Augsburg (DE)

(57) **Zusammenfassung**

Die Erfindung betrifft ein Verfahren zur Auslegung eines Messsystems zur Messung einer Messgröße, der eine mechanische Schwingung überlagert ist, in einem insbesondere geregelten Antriebssystem. Um die Stabilität einer derartigen schwingungsfähigen Anordnung zu erhöhen, wird vorgeschlagen
- eine erste Position (1) in der schwingungsfähigen Anordnung und eine zweiten Position (2) in der schwingungsfähigen Anordnung derart zu ermitteln, dass die Schwingung bezüglich ihrer Amplitude an der ersten und zweiten Position (1,2) im Wesentlichen gleich ist und bezüglich ihrer Phase im Wesentlichen entgegengesetzt ist, und
- einen ersten Sensor zur Erfassung eines ersten Messsignals an der ersten Position (1) und einen zweiten Sensor zur Erfassung eines zweiten Messsignals an der zweiten Position (2) zu platzieren wird und
- die Sensoren derart zu verknüpfen, dass die Messgröße aus der Summe des ersten und zweiten Messsignals berechnet werden kann.

## Beschreibung

### Verfahren zur Schwingungsfilterung

Die Erfindung betrifft ein Verfahren zur Auslegung eines Messsystems zur Messung einer Messgröße, der eine mechanische Schwingung überlagert ist, in einer schwingungsfähigen Anordnung, insbesondere in einem Antriebssystem. Ferner betrifft die Erfindung ein Verfahren zur Ermittlung einer derartigen Messgröße, sowie ein Antriebssystem, dass ein nach dem erfindungsgemäßen Verfahren ausgelegtes Messsystem aufweist. Die Erfindung kommt vorteilhafterweise bei der Antriebsregelung insbesondere von Werkzeug- oder Produktionsmaschinen zum Einsatz.

Bei einer Werkzeugmaschine wird auf Basis eines sogenannten Teileprogramms ein Werkstück computergesteuert bearbeitet. Ein elektrischer Antrieb steuert hierbei entlang einer vorprogrammierten Werkzeugbahn ein zur Bearbeitung des Werkstücks vorgesehenes Werkzeug. Damit die durch das Teileprogramm vorgegebene Werkzeugbahn möglichst exakt eingehalten wird und damit eine möglichst hohe Bearbeitungsqualität erreicht wird, ist eine stabile Regelung des elektrischen Antriebes notwendig. Beispiele für Werkzeugmaschinen sind Dreh-oder Fräsmaschinen.

Unter dem Begriff Produktionsmaschinen werden beispielsweise Verpackungsmaschinen, Druckmaschinen, Bestückungsmaschinen oder Spritzgussmaschinen verstanden, für deren Antriebe ebenfalls eine stabile Lageregelung benötigt wird, um nicht nur zeiteffektive sondern auch exakte Produktionsprozesse zu garantieren.

Die vorgenannten Maschinen weisen elastische Strukturen auf, die Eigenschwingungsformen besitzen. Werden derartige Eigenresonanzen im Antriebsstrang dieser Maschinen angeregt, kann dies zu Stabilitätsproblemen im Regelkreis führen, da diese Anregungen die Übertragungsstrecke (Regelstrecke) zwischen den im Antriebssystem verbauten Aktoren und Sensoren bezüglich Amplitude und Phase modulieren.

Um solche Resonanzüberhöhungen und die damit verbundenen Stabilitätsprobleme zu vermeiden, werden nach dem Stand der Technik Tiefpass- oder Bandsperrfilter eingesetzt. Diese sorgen dafür, dass die hinsichtlich der Eigenschwingungsformen relevanten Frequenzen von der im Antriebssystem verbauten Sensorik nicht erfasst werden, so dass diese auch nicht zur Instabilität des Regelkreises führen können. Nachteilhaft an derartigen Filtern ist, dass diese die Dynamik des Regelkreises reduzieren. Ferner haben Filter einen verzögernden bzw. dynamisch modulierenden Effekt, so dass die Problematik der Eigenschwingungsformen meist nur verschoben aber nicht grundsätzlich gelöst wird.

Der Erfindung liegt daher die Aufgabe zugrunde, die Stabilität einer geregelten schwingungsfähigen Anordnung zu erhöhen.

Diese Aufgabe wird durch die Merkmale der unabhängigen Ansprüche 1, 5, 6, 11 und 12 gelöst.

Vorteilhafte Ausführungsformen der Erfindung sind in den Unteransprüchen genannt.

Der Kerngedanke der Erfindung liegt darin, Schwingungsformen, die zu einer Instabilität eines Regelkreises führen können, geometrisch zu filtern. Dies wird erfindungsgemäß dadurch erreicht, dass ein Sensor zur Erfassung der gewünschten Messgröße an einer Position der schwingungsfähigen Anordnung positioniert wird, an der bekanntermaßen eine die Messgröße überlagernde mechanische Schwingung nicht messbar ist. D.h., es wird ein sogenannter Schwingungsknoten für die Position des Sensors gewählt, in dem die Amplitude der Messgröße nahezu Null ist. Dies hat zur Folge, dass die der Messgröße überlagerte Schwingung, im geschlossenen Regelkreis nicht auftaucht und somit auch nicht zu einer Instabilität führen kann.

In vorteilhafter Ausgestaltung der Erfindung wird ein derartiger Schwingungsknoten mittels einer numerischen und/oder experimentellen Analyse der schwingungsfähigen Anordnung ermittelt. Beispielsweise wird zunächst eine Finite Elemente Simulation (FEM) von der schwingungsfähigen Anordnung durchgeführt, um festzustellen, an welchen Stellen die der Messgröße überlagerte Schwingung gerade nicht messbar ist. Alternativ oder auch zusätzlich kann eine experimentelle Analyse der schwingungsfähigen Anordnung durchgeführt werden, um derartige Schwingungsknoten ausfindig zu machen. Ist der Schwingungsknoten ermittelt, so wird der beispielsweise mit einer Antriebsregelung verknüpfte Sensor an dem Schwingungsknoten positioniert.

Der erfindungsgemäße Gedanke der geometrischen Filterung der überlagerten mechanischen Schwingung kann alternativ auch durch geschickte Positionierung zweier Sensoren innerhalb der schwingungsfähigen Anordnung erreicht werden. Es müssen zunächst zwei Positionen ermittelt werden, an denen die Amplituden der überlagerten mechanischen Schwingung betragsmäßig gleich, die Schwingung jedoch um 180° phasenverschoben sind. An diese Positionen werden schließlich Sensoren platziert und derart miteinander verknüpft, dass die von den Sensoren ermittelten Messsignale aufsummiert werden. Durch die entgegengesetzte Phasenlage der überlagerten Schwingung wird die überlagerte Schwingung in dem Summensignal eliminiert. Somit kann auf Basis der Summe eines ersten Messsignals, welches vom ersten Sensor stammt, und eines zweiten Messsignals, welches vom zweiten Sensor stammt, die Messgröße bereinigt um die überlagerte Schwingung bestimmt werden.

Hierbei sind mindestens zwei Sensoren zu verwenden, wobei durchaus auch mehrere Sensorpaare verwendet werden können, wenn mehrere Schwingungsmoden in der Anordnung vorhanden sind.

Auch hierbei ist eine Ausführungsform der Erfindung vorteilhaft, bei der die erste und zweite Position mittels einer numerischen und/oder experimentellen Analyse ermittelt werden.

Die Erfindung findet besonders vorteilhaft Anwendung in Ausführungsformen, bei denen die schwingungsfähige Anordnung ein Antriebssystem darstellt.

So gestaltet sich eine vorteilhafte Ausgestaltung der Erfindung dadurch, dass die Messgröße ein Winkel ist und aus dem gemessenen Winkel eine Winkelbeschleunigung berechnet wird. Es können selbstverständlich auch andere Größen ermittelt werden wie Position und Geschwindigkeit etc..

Eine derartige Ausführungsform kann vorteilhaft dahingehend weitergebildet werden, dass für den ersten Sensor ein erster Winkelmesskopf eines Winkelmesssystems und für den zweiten Sensor ein zweiter Winkelmesskopf des Messsystems verwendet wird, wobei die Winkelmessköpfe zur Kompensation eines systematischen Rundlauffehlers innerhalb der schwingungsfähigen Anordnung - also insbesondere eines Antriebssystems - vorgesehen sind. Zur Kompensation des Rundlauffehlers in Antriebssystemen sind die Winkelmessköpfe des Winkelmesssystems ohnehin schon derartig angeordnet, dass die gewünschte Amplitudengleichheit bei entgegengesetzter Phase der überlagerten mechanischen Schwingung beispielsweise bei einer Biegebeanspruchung innerhalb der Anordnung häufig gegeben ist.

Sofern das Messsystem mit dem ersten und zweiten Sensor nach einer der zuvor beschriebenen Ausführungsformen ausgelegt ist, kann die Messgröße sehr einfach aus der Summe des ersten und zweiten Signals beispielsweise mit Hilfe eines mit den Sensoren gekoppelten Mikrocontrollers oder digitalem Signalprozessors ermittelt werden.

Die vorgenannten Mess- und Auslegungsverfahren sind insbesondere bei Antriebssystemen vorteilhaft, die Teil einer Produktions- oder Werkzeugmaschine sind. Somit ist bei einer Werkzeugmaschine oder bei einer Produktionsmaschine, die ein Antriebssystem mit einem derart ausgelegten Messsystem besitzt, eine deutlich höhere Stabilität der Antriebsregelung zu erwarten, als es aus dem Stand der Technik bekannt ist.

Im Folgenden wird die Erfindung anhand der in den Figuren dargestellten Ausführungsformen näher beschrieben und erläutert. Es zeigen:
- FIG 1: ein FEM-Modell eines Antriebsstrangs umfassend eine von einem Motor über eine Welle angetriebene Einheit und vier Sensoren zur Messung einer Winkelbeschleuni- gung,
- FIG 2: einen Frequenzgang des Antriebssystems unter mechani- scher Schwingungsanregung,
- FIG 3: das FEM-Modell bei einer ersten Biegebeanspruchung mit einer ersten Frequenz,
- FIG 4: das FEM-Modell bei einer Torsionsbeanspruchung mit einer zweiten Frequenz,
- FIG 5: das FEM-Modell bei einer zweiten Biegebeanspruchung mit einer dritten Frequenz und
- FIG 6: ein Winkelmesssystem zur Kompensation eines systema- tischen Rundlauffehlers, welches zur geometrischen Filterung einer eine Messgröße überlagerten Schwin- gung eingerichtet ist.

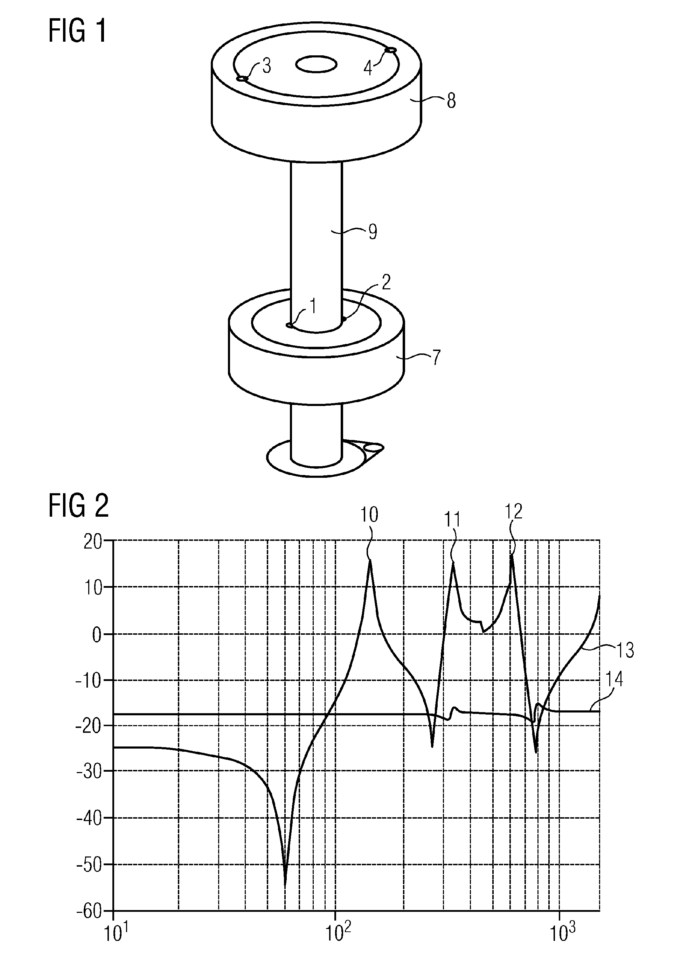

FIG 1 zeigt ein FEM-Modell eines Antriebsstrangs umfassend eine von einem Motor 7 über eine Welle 9 angetriebener Einheit 8 und vier Sensoren zur Messung einer Winkelbeschleunigung. Die Abkürzung FEM steht für Finite Elemente Modellierung und bezeichnet ein gängiges Modellierungsverfahren, welches insbesondere auch in mechanischen Systemen zur Berechnung statischer und dynamischer Belastungen herangezogen wird.

Von den vier Sensoren sind ein erster Sensor und ein zweiter Sensor in unmittelbarer Nähe des Motors 7 an der antreibenden Welle 9 angebracht. Der zweite Sensor ist bezüglich der Symmetrieachse der Welle 9 diametral zum ersten Sensor platziert. Analog sind ein dritter Sensor und ein vierter Sensor, die beide auf der kreisförmigen angetriebenen Einheit 8 platziert sind, diametral zu dieser angeordnet. D.h., eine durch die erste Position 1 des ersten Sensors und die zweite Position 2 des zweiten Sensors verlaufende Verbindungslinie schneidet die Symmetrieachse der Welle 9 ebenso wie eine durch die dritte Position 3 des dritten Sensors und die vierte Position 4 des vierten Sensors verlaufende Verbindungslinie.

Alle vier Sensoren dienen der Erfassung einer einzigen Messgröße - der Winkelbeschleunigung. Durch die Verwendung von vier Sensoren wird eine geometrische Filterung von mechanischen Schwingungen erreicht, die der Messgröße überlagert sind. So sind die erste Position 1 und die zweite Position 2 des ersten und zweiten Sensors derart gewählt, dass eine auf die Welle 9 wirkende Biegebeanspruchung in der ersten Position 1 genau entgegengesetzt zu der Wirkung in der zweiten Position 2 ausfällt. Dies gilt auch bezüglich einer Biegebeanspruchung an der dritten und vierten Position 3,4 des dritten und vierten Sensors.

Ferner wird eine Torsionsbeanspruchung auf diese Art und Weise geometrisch gefiltert. Eine Torsionsschwingung hat in der ersten Position 1 und in der zweiten Position 2 eine entgegengesetzte Wirkung zu der in der dritten Position 3 und der vierten Position 4 durch die Torsionsschwingung hervorgerufenen Wirkung.

Mit Hilfe der vier Sensoren kann nun die Winkelbeschleunigung aus den vier von den Sensoren ermittelten Messsignalen folgendermaßen berechnet werden. Das Messsignal a ergibt sich aus den Messsignalen Sens 1,...,Sens 4 gemäß folgender Formel:
a = 0.25*Sens 1 - 0.25*Sens 2 + 0.25*Sens 3-0.25*Sens 4

FIG 2 zeigt einen Frequenzgang des Antriebssystems unter mechanischer Schwingungsanregung. Es ist zum Einen ein erster Frequenzgang 13 dargestellt ohne die geometrische Schwingungsfilterung. Zum Anderen ist ein zweiter Frequenzgang 14 dargestellt, bei dem die die Messgröße überlagerten Schwingungen gemäß einer Ausführungsform der vorliegenden Erfindung gefiltert werden.

Es ist zu erkennen, dass eine erste Eigenfrequenz 10 des Systems bei etwa 140 Hz liegt, eine zweite Eigenfrequenz 11 bei ca. 324 Hz und eine dritte Eigenfrequenz 12 bei ca. 602 Hz. Verwendet man wie in FIG 1 dargestellt nicht einen Sensor zur Messung der Messgröße für einen Regelkreis des Antriebsstranges sondern vier Sensoren und verknüpft deren Messsignale in oben beschriebener Art und Weise, so erhält man für das Antriebssystem den zweiten Frequenzgang 14 bei dem die Resonanzüberhöhungen des ersten Frequenzgangs 13 nicht mehr zu erkennen sind.

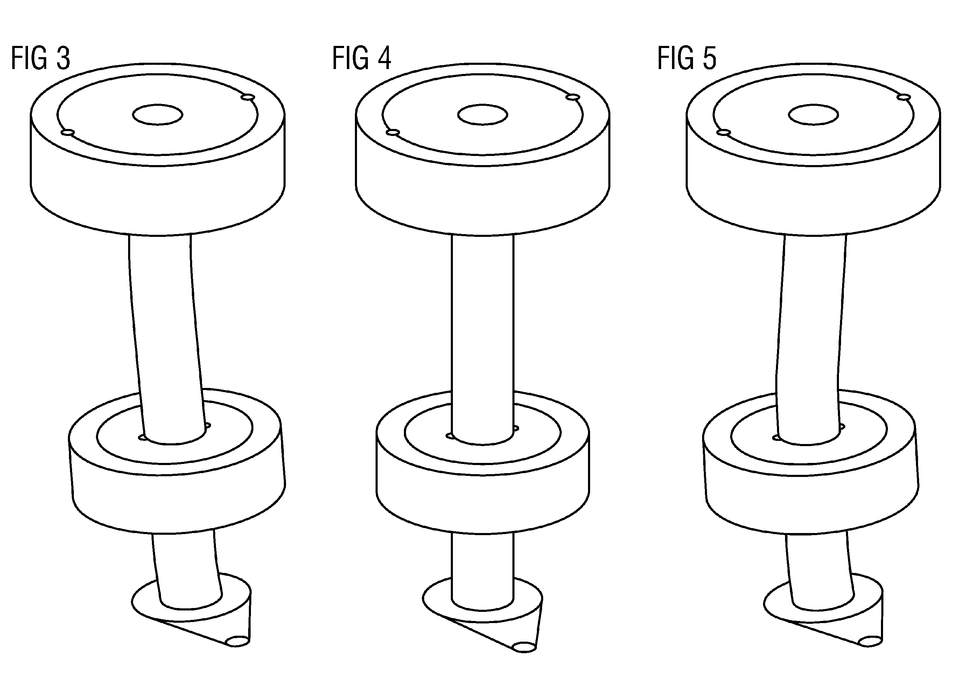

FIG 3 zeigt das FEM-Modell bei einer ersten Biegebeanspruchung mit der ersten Frequenz 10. Anhand des finite Elementemodells lässt sich erkennen, dass insbesondere die Biegung an der ersten Position eine der Biegung an der zweiten Position 2 entgegengesetzte Wirkung zeigt, so dass sich diese kompensieren können.

FIG 4 zeigt das FEM-Modell bei einer Torsionsbeanspruchung mit der zweiten Frequenz 11. Eine Torsionsbeanspruchung führt beispielsweise dazu, dass die Welle 9 des Antriebsstrangs ihre Winkellage im Bereich des angetriebenen Elementes 8 verzögert ändert im Vergleich zu dem Bereich der Welle 9 in der Nähe des Motors 7. Dieser durch die Torsionsschwingung hervorgerufene Effekt kann durch die beidseitige Anordnung von Sensoren bezüglich des Mittelpunktes der Welle 9 geometrisch gefiltert werden.

FIG 5 zeigt das FEM-Modell bei einer zweiten Biegebeanspruchung mit der dritten Frequenz 13. Wie auch bei der ersten Biegebeanspruchung gemäß FIG 3 kann durch die diametrale Anordnung des ersten Sensors und des zweiten Sensors bzw. des dritten Sensors und des vierten Sensors die mechanische Schwingung geeignet gefiltert werden.

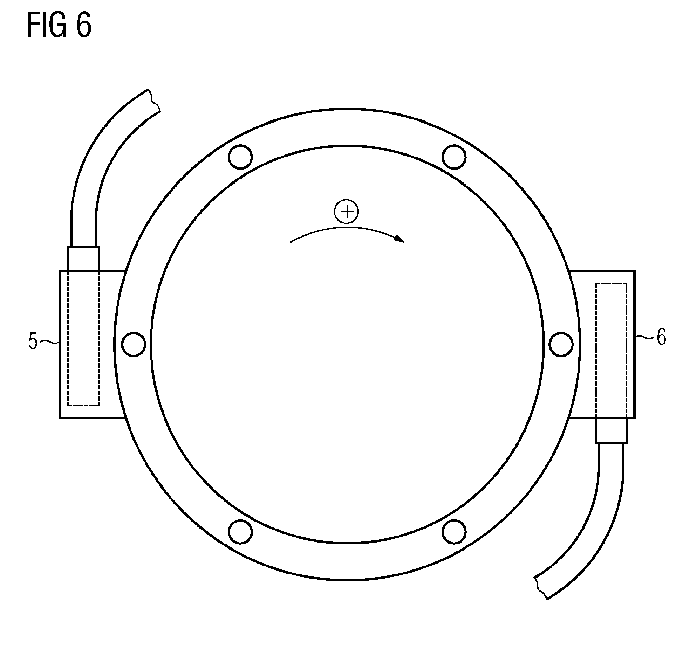

FIG 6 zeigt ein Winkelmesssystem zur Kompensation eines systematischen Rundlauffehlers, welches zur geometrischen Filterung einer eine Messgröße überlagerten Schwingung eingerichtet ist. Das Winkelmesssystem umfasst einen ersten Messkopf 5 und einen zweiten Messkopf 6 zur Ermittlung der Winkellage. Die Winkelbeschleunigung des angetriebenen Systems lässt sich durch zweifache Differenzierung der erfassten Winkellage mit Hilfe einer geeigneten hier nicht dargestellten Verarbeitungseinheit bestimmen. Ein Rundlauffehler ergibt sich beispielsweise dann, wenn die beiden Messköpfe 5,6 nicht exakt den gleichen Abstand zum Mittelpunkt der angetriebenen Einheit haben. Auch eine Abweichung der dargestellten angetriebenen Einheit von einer idealen Kreisform würde einen Rundlauffehler bewirken. Der Rundlauffehler ist jedoch beim ersten Messkopf 5 stets dem Rundlauffehler am zweiten Messkopf 6 entgegengerichtet. Entsprechend kann durch eine geeignete Mittelwertbildung die wahre Winkellage sehr einfach ermittelt werden.

Aufgrund der zum Zwecke der Rundlauffehlerkompensation gewählten Anordnung der Messköpfe 5,6 eignet sich dieses System auch hervorragend, um gemäß einer Ausführungsform der Erfindung eine mechanische Biegebeanspruchung, die einer gewünschten Messgröße - beispielsweise der Winkelbeschleunigung - überlagert ist, geometrisch zu filtern. Es muss also kein Mehraufwand in das System investiert werden, um neben dem Rundlauffehler auch die einen Regelkreis störende und zur Instabilität führende Eigenschwingung zu filtern.

## Patentansprüche

1. Verfahren zur Auslegung eines Messsystems zur Messung einer Messgröße, der eine mechanische Schwingung überlagert ist, in einer schwingungsfähigen Anordnung, bei dem
- eine erste Position (1) in der schwingungsfähigen Anordnung und eine zweiten Position (2) in der schwingungsfähigen Anordnung derart ermittelt werden, dass die Schwingung bezüglich ihrer Amplitude an der ersten und zweiten Position (1,2) im Wesentlichen gleich ist und bezüglich ihrer Phase im Wesentlichen entgegengesetzt ist, und
- ein erster Sensors zur Erfassung eines ersten Messsignals an der ersten Position (1) und ein zweiter Sensors zur Erfassung eines zweiten Messsignals an der zweiten Position (2) platziert wird und
- die Sensoren derart verknüpft werden, dass die Messgröße aus der Summe des ersten und zweiten Messsignals berechnet werden kann.

2. Verfahren nach Anspruch 1,
wobei die erste und zweite Position (1,2) mittels einer numerischen und/oder experimentellen Analyse der schwingungsfähigen Anordnung ermittelt werden.

3. Verfahren nach einem der vorhergehenden Ansprüche,
wobei die Messgröße ein Winkel ist und aus dem gemessenen Winkel eine Winkelbeschleunigung berechnet wird.

4. Verfahren nach Anspruch 3,
wobei für den ersten Sensor ein erster Winkelmesskopf (5) eines Winkelmesssystems und für den zweiten Sensor ein zweiter Winkelmesskopf (6) des Messsystems verwendet wird, wobei die Winkelmessköpfe (5,6) zur Kompensation eines systematischen Rundlauffehlers innerhalb der schwingungsfähigen Anordnung vorgesehen sind.

5. Verfahren zur Ermittlung einer Messgröße mittels einem nach einem der Ansprüche 1 bis 4 ausgelegten Messsystem, wobei die Messgröße aus der Summe des ersten und zweiten Messsignals berechnet wird.

6. Verfahren zur Auslegung eines Messsystems zur Messung einer Messgröße in einer schwingungsfähigen Anordnung mit folgenden Verfahrensschritten:
- Ermittlung eines Schwingungsknotens innerhalb der schwingungsfähigen Anordnung, in dem die Amplitude einer der Messgröße überlagerten mechanischen Schwingung nahezu Null ist,
- Positionierung eines Sensors zur Erfassung der Messgröße im Schwingungsknoten.

7. Verfahren nach Anspruch 6,
wobei der Schwingungsknoten mittels einer numerischen und/oder experimentellen Analyse der schwingungsfähigen Anordnung ermittelt wird.

8. Verfahren nach einem der vorhergehenden Ansprüche,
wobei das schwingungsfähige System ein Antriebssystem ist.

9. Verfahren nach Anspruch 8,
wobei das Antriebssystems Teil einer Produktions- oder Werkzeugmaschine ist.

10. Verfahren nach einem der Ansprüche 8 oder 9, wobei die Messgröße als Regelgröße für einen Regelkreis des Antriebssystems vorgesehen ist.

11. Antriebssystem mit
- mindestens einem ersten Sensors zur Erfassung eines ersten Messsignals an einer ersten Position (1) des Antriebssystems,
- einem zweiten Sensors zur Erfassung eines zweiten Messsignals an einer zweiten Position (2) des Antriebssystems und
- Mittel zur Berechnung einer Messgröße aus der Summe des ersten und zweiten Messsignals,
wobei die Positionen (1,2) derart gewählt sind, dass die Schwingung bezüglich ihrer Amplitude an der ersten und zweiten Position (1,2) im Wesentlichen gleich ist und bezüglich ihrer Phase im Wesentlichen entgegengesetzt ist.

12. Antriebssystem mit einem in einem Schwingungsknoten platzierten Sensor zur Erfassung einer Messgröße, wobei in dem Schwingungsknoten die Amplitude einer der Messgröße überlagerten mechanischen Schwingung nahezu Null ist.

13. Werkzeugmaschine mit einem Antriebssystem nach Anspruch 11 oder 12.

14. Produktionsmaschine mit einem Antriebssystem nach Anspruch 11 oder 12.
